(19) Europäisches Patentamt
European Patent Office
Office européen des brevets

(11) **EP 3 183 152 B1**

(12) **EUROPÄISCHE PATENTSCHRIFT**

(45) Veröffentlichungstag und Bekanntmachung des Hinweises auf die Patenterteilung:
**01.12.2021 Patentblatt 2021/48**

(21) Anmeldenummer: **15760391.1**

(22) Anmeldetag: **20.08.2015**

(51) Int Cl.:
**B60W 30/095** *(2012.01)* **B60W 50/14** *(2020.01)*

(86) Internationale Anmeldenummer:
**PCT/EP2015/069122**

(87) Internationale Veröffentlichungsnummer:
**WO 2016/026922 (25.02.2016 Gazette 2016/08)**

(54) **VERFAHREN ZUM WARNEN EINES FAHRERS EINES KRAFTFAHRZEUGS VOR DER ANWESENHEIT EINES OBJEKTS IN DER UMGEBUNG, FAHRERASSISTENZSYSTEM UND KRAFTFAHRZEUG**

METHOD FOR WARNING A DRIVER OF A VEHICLE OF THE PRESENCE OF AN OBJECT IN THE SURROUNDINGS, DRIVER ASSISTANCE SYSTEM AND MOTOR VEHICLE

PROCÉDÉ POUR AVERTIR LE CONDUCTEUR D'UN VÉHICULE À MOTEUR DE LA PRÉSENCE D'UN OBJET DANS SON ENVIRONNEMENT PROCHE, SYSTÈME D'AIDE À LA CONDUITE ET VÉHICULE À MOTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.08.2014 DE 102014111951**

(43) Veröffentlichungstag der Anmeldung:
**28.06.2017 Patentblatt 2017/26**

(73) Patentinhaber: **Valeo Schalter und Sensoren GmbH**
**74321 Bietigheim-Bissingen (DE)**

(72) Erfinder:
• **AYYAPPAN, Thirumalai Kumarasamy**
**74321 Bietigheim-Bissingen (DE)**
• **HEIMBERGER, Markus**
**74321 Bietigheim-Bissingen (DE)**

(74) Vertreter: **Pothmann, Karsten et al**
**Valeo Schalter und Sensoren GmbH**
**CDA-IP**
**Laiernstraße 12**
**74321 Bietigheim-Bissingen (DE)**

(56) Entgegenhaltungen:
EP-A1- 2 338 733     WO-A1-2013/037539
DE-A1-102010 023 164     DE-A1-102010 061 829
DE-A1-102011 121 728

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft ein Verfahren zum Warnen eines Fahrers eines Kraftfahrzeugs vor der Anwesenheit eines Objekts in einer Umgebung des Kraftfahrzeugs mittels eines Fahrerassistenzsystems, bei welchem eine Position des Kraftfahrzeugs mittels einer Sensoreinrichtung ermittelt wird, ein voraussichtlicher Fahrschlauch des Kraftfahrzeugs ermittelt wird, anhand der ermittelten Position des Objekts und des ermittelten Fahrschlauchs ein Kollisionsabstand, welcher einen Abstand zwischen dem Kraftfahrzeug und dem Objekt beim Bewegen des Kraftfahrzeugs innerhalb des ermittelten Fahrschlauchs beschreibt, ermittelt wird, ein Wert für einen Mindestabstand zwischen dem Kraftfahrzeug und dem Objekt bestimmt wird und ein Warnsignal ausgegeben wird, falls der Wert für den Mindestabstand einen vorbestimmten Grenzwert unterschreitet. Die Erfindung betrifft außerdem ein Fahrerassistenzsystem sowie ein Kraftfahrzeug mit einem solchen Fahrerassistenzsystem.

Das Interesse gilt vorliegend insbesondere sogenannten Kollisionswarnsystemen, welche einen Fahrer eines Kraftfahrzeugs dann warnen, wenn eine Kollision zwischen einem Kraftfahrzeug und dem fahrzeugexternen Objekt bevorsteht. Zum Warnen des Fahrers kann beispielsweise ein akustisches oder ein optisches Warnsignal ausgegeben werden. In diesem Zusammenhang beschreibt die DE 10 2012 203 228 A1 ein Verfahren zur Vermeidung oder zur Abschwächung von Folgen bei Kollisionen eines Kraftfahrzeugs mit einem Hindernis in einem seitlichen Nahbereich des Kraftfahrzeugs. Bei dem Verfahren wird ein Fahrschlauch des Kraftfahrzeugs ermittelt und eine Kollision anhand des Fahrschlauchs des Kraftfahrzeugs und der Lage des Hindernisses ermittelt. Zudem wird ein Lenkwinkel von Hinterrädern des Kraftfahrzeugs bei einer ermittelten Kollisionsgefahr derart eingestellt, dass dem Hindernis ausgewichen wird.

Darüber hinaus beschreibt die DE 101 28 792 A1 ein System zur Vermeidung von Kollisionen eines Fahrzeugs mit Hindernissen. Dabei wird bei der Fortsetzung der Fahrt in den nächsten Zeitabschnitten der benötigte Fahrraum des Kraftfahrzeugs vorausberechnet und mit dem erfassten tatsächlichen vorhandenen hindernisfreien Fahrraum verglichen. Dieser Vergleich liefert eine frühzeitige Vorhersage einer möglichen Kollision. Der Fahrer wird durch entsprechende Warneinrichtungen auf die Kollisionsgefahr hingewiesen und kann so rechtzeitig reagieren. Beispielsweise kann ein Warnsignal ausgegeben werden, wenn eine vorgegebene Distanz unterschritten wird.

Des Weiteren ist eine Warneinrichtung für Kraftfahrzeuge aus der DE 198 43 564 A1 bekannt. Die Warneinrichtung dient zur Überwachung eines Abstands eines Fahrzeugs zu einem Hindernis und weist einen Warnsignalgeber auf, der von einer Auswerte- und Steuereinrichtung zur Erzeugung eines Nahbereichs-Warnsignals gesteuert wird, wenn der von der Auswerte- und Steuereinrichtung abgeschätzte Abstand kleiner als ein Grenzwert ist. Darüber hinaus ist es vorgesehen, dass die Auswerte- und Steuereinrichtung Mittel zum Einschätzen einer Kollision des Fahrzeugs mit dem Hindernis anhand des abgeschätzten Abstands und der Geschwindigkeit des Fahrzeugs umfasst und dass die Auswerte- und Steuereinrichtung den Warnsignalgeber steuert, um ein Fernbereichs-Warnsignal auszugeben, wenn der abgeschätzte Abstand größer als der Grenzwert ist und die Einschätzung das Vorhandensein einer Kollisionsgefahr ergibt. Zudem beschreibt die DE 10 2010 023 164 A1 ein Verfahren zum Warnen eines Fahrers eines Kraftfahrzeugs vor der Anwesenheit eines Objekts in der Umgebung. Dabei werden eine relative Position des Objekts bezüglich des Kraftfahrzeugs sowie eine voraussichtliche Fahrbahn des Kraftfahrzeugs ermittelt. Der Fahrer wird durch ein Fahrerassistenzsystem nach Erfülltsein eines Warnkriteriums gewarnt, wobei hierbei die tatsächliche Weglänge der Fahrbahn zwischen dem Kraftfahrzeug und dem Objekt berücksichtigt wird. In diesem Fall wird der Fahrer also nur gewarnt, wenn es tatsächlich notwendig ist.

Ein weiteres derartiges Verfahren ist aus der WO 2013/037539 A1 auch bekannt.

Es ist Aufgabe der vorliegenden Erfindung, eine Lösung aufzuzeigen, wie ein Fahrer eines Kraftfahrzeugs besonders zuverlässig und bedarfsgerecht vor einem Objekt in der Umgebung gewarnt werden kann.

Diese Aufgabe wird erfindungsgemäß durch ein Verfahren, durch ein Fahrerassistenzsystem sowie durch ein Kraftfahrzeug mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Ein erfindungsgemäßes Verfahren dient zum Warnen eines Fahrers eines Kraftfahrzeugs vor der Anwesenheit eines Objekts in einer Umgebung des Kraftfahrzeugs mittels eines Fahrerassistenzsystems des Kraftfahrzeugs. Bei dem Verfahren werden eine Position des Objekts mittels einer Sensoreinrichtung und ein voraussichtlicher Fahrschlauch des Kraftfahrzeugs ermittelt. Zudem wird anhand der ermittelten Position des Objekts und des ermittelten Fahrschlauchs ein Kollisionsabstand ermittelt, welcher einen Abstand zwischen dem Kraftfahrzeug und dem Objekt beim Bewegen des Objekts innerhalb des ermittelten Fahrschlauchs beschreibt. Darüber hinaus wird ein Wert für einen Mindestabstand zwischen dem Kraftfahrzeug und dem Objekt ermittelt. Zudem wird ein Warnsignal ausgegeben, falls der Wert für den Mindestabstand einen vorbestimmten Grenzwert unterschreitet, wobei der ermittelte Wert für den Mindestabstand in Abhängigkeit von dem ermittelten Kollisionsabstand angepasst wird.

Der vorliegenden Erfindung liegt der Erkenntnis zugrunde, dass der Fahrer eines Kraftfahrzeug besonders bedarfsgerecht vor einem Objekt in der Umgebung gewarnt werden kann, wenn das Warnsignal in Abhängigkeit von dem Kollisionsabstand, also einem prädizierten Abstand zur Kollision, ausgegeben wird. Vorliegend wird das Warnsignal ausgegeben, falls ein Wert für den Mindestabstand zwischen dem Kraftfahrzeug und dem Objekt einen vorbestimmten Grenzwert unterschreitet. Der Mindestabstand, der auch als Shortest Distance (SD) bezeichnet wird, stellt den geringsten Abstand zwischen dem Kraftfahrzeug, beispielsweise der Karosserie des Kraftfahrzeugs, und dem Objekt dar. Für den Mindestabstand wird ein Wert bzw. ein Messwert bestimmt. Der Wert charakterisiert also den Mindestabstand. Die Warnung des Fahrers in Abhängigkeit von dem Wert für den Mindestabstand weist den Vorteil auf, dass der Fahrer den Mindestabstand verstehen und mit der realen Welt in Verbindung bringen kann.

Vorliegend wird zusätzlich ein Fahrschlauch des Kraftfahrzeugs ermittelt und anhand des Fahrschlauchs und der Position des Objekts relativ zu dem Kraftfahrzeug ein Kollisionsabstand bestimmt. Der Kollisionsabstand, der auch als Distance To Collision (DTC) bezeichnet werden kann, beschreibt den Abstand zwischen dem Kraftfahrzeug und dem Objekt beim Bewegen des Kraftfahrzeugs innerhalb des Fahrschlauchs. Mit anderen Worten beschreibt der Kollisionsabstand den Abstand zwischen dem Objekt und dem Bereich des Kraftfahrzeugs, der mit dem Objekt kollidieren wird. Bei dem Kollisionsabstand wird also der Bereich des Kraftfahrzeugs berücksichtigt, welcher beim Bewegen des Kraftfahrzeugs innerhalb des Fahrschlauchs mit dem Objekt kollidieren würde. Es kann auch ein Wert bzw. Messwert für den Kollisionsabstand bestimmt werden. Der Kollisionsabstand und der Mindestabstand können sich in Abhängigkeit von der relativen Lage des Kraftfahrzeugs zu dem Objekt und des Fahrschlauchs unterscheiden. Durch das Anpassen des Werts für den Mindestabstand in Abhängigkeit von dem ermittelten Kollisionsabstand kann somit zudem eine prädizierte Warnung bereitgestellt werden. Vorliegend wird also zur Bestimmung des Warnsignals nicht der tatsächliche Mindestabstand sondern ein angepasster Wert für den Mindestabstand verwendet. Es kann also mit einem angepassten Wert für den Mindestabstand gerechnet werden, der sich von dem tatsächlichen Mindestabstand unterscheidet. Somit kann es beispielsweise vorgesehen sein, dass das Warnsignal früher ausgegeben wird und der Fahrer somit mehr Zeit zum Reagieren hat.

In einer Ausführungsform wird der Kollisionsabstand in Abhängigkeit von der Zeit ermittelt und der ermittelte Wert für den Mindestabstand wird angepasst, falls sich der Kollisionsabstand in Abhängigkeit von der Zeit ändert. Der Kollisionsabstand kann beispielsweise zu vorbestimmten Zeitpunkten ermittelt werden. Dabei kann untersucht werden, ob sich der jeweilige Kollisionsabstand, der zu den vorbestimmten Zeitpunkten ermittelt wurde, unterscheidet. Dabei ist es auch denkbar, dass der Kollisionsabstand fortlaufend während der Bewegung des Kraftfahrzeugs ermittelt wird. Somit kann der Wert für den Mindestabstand bezüglich der relativen Lage des Kraftfahrzeugs zu dem Objekt kontinuierlich angepasst werden.

Bevorzugt wird der ermittelte Wert für den Mindestabstand verringert, falls sich der ermittelte Kollisionsabstand in Abhängigkeit von der Zeit verringert. Somit kann quasi eine relative Geschwindigkeit zwischen dem Kraftfahrzeug und dem Objekt bestimmt werden und bei der Veränderung beziehungsweise Verringerung des Werts für den Mindestabstand berücksichtigt werden. Somit kann beispielsweise verhindert werden, dass ein Warnsignal bereits in dem Fahrzustand ausgegeben wird, in dem noch keine Kollision mit dem Objekt droht. Auf diese Weise kann verhindert werden, dass der Fahrer durch Warnsignale gestört oder verunsichert wird. Außerdem kann verhindert werden, dass ein Warnsignal bei einer geringfügigen Bewegung des Lenkrads ausgegeben werden.

Weiterhin hat es sich vorteilhaft gezeigt, wenn anhand der Verringerung des Kollisionsabstands in Abhängigkeit der Zeit ein Korrekturwert bestimmt wird und der Wert für den Mindestabstand um den Korrekturwert verringert wird. Für die Verringerung des Kollisionsabstands in Abhängigkeit von der Zeit können vorbestimmte Korrekturwerte in einer Speichereinheit des Fahrerassistenzsystems hinterlegt sein. Diese können in Abhängigkeit von der ermittelten Verringerung des Kollisionsabstands von dem Wert für den Mindestabstand abgezogen werden. Somit kann der Wert für den Mindestabstand auf besonders einfache Weise angepasst werden.

Vorzugsweise wird der Kollisionsabstand während einer vorbestimmten Zeitdauer fortlaufend ermittelt. Somit kann der Kollisionsabstand kontinuierlich erfasst werden. Dabei ist es auch denkbar, dass der Wert für den Mindestabstand kontinuierlich in Abhängigkeit der erfassten Änderung des Kollisionsabstands angepasst wird. Auf diese Weise kann die Warnung des Fahrers besonders zuverlässig erfolgen.

Die vorbestimmte Zeitdauer, in der der Kollisionsabstand fortlaufend ermittelt wird, liegt bevorzugt in einem Intervall zwischen 100 ms und 150 ms. In diesem Zeitintervall kann der Kollisionsabstand zwischen dem Kraftfahrzeug und dem Objekt während der Bewegung des Kraftfahrzeugs relativ zu dem Objekt zuverlässig erfasst werden. Im Anschluss daran kann überprüft werden, ob sich der Kollisionsabstand in Abhängigkeit von der Zeit geändert hat und ob der Wert für den Mindestabstand anzupassen ist. Auf diese Weise kann der Wert für den Mindestabstand auch während der Bewegung des Kraftfahrzeugs zuverlässig angepasst werden.

Weiterhin hat es sich als vorteilhaft erwiesen, wenn ein optisches Signal als das Warnsignal ausgegeben wird, falls der Grenzwert unterschritten wird. Ein derartiges optisches Signal kann dem Fahrer beispielsweise auf einer Anzeigeeinrichtung des Kraftfahrzeugs dargestellt werden. Dabei ist es auch denkbar, dass der aktuelle beziehungsweise der angepasste Wert für den Mindestabstand optisch angezeigt wird. Alternativ oder zusätzlich kann der Grenzwert, ab dem eine Warnung erfolgt, angezeigt werden. Somit kann der Fahrer zuverlässig vor einer Kollision mit dem Objekt gewarnt werden.

In einer weiteren Ausführungsform wird ein akustisches Signal als das Warnsignal ausgegeben, falls der Grenzwert unterschritten wird und eine Änderung des Kollisionsabstands in Abhängigkeit von der Zeit ermittelt wird. Zusätzlich oder alternativ zu dem optischen Warnsignal kann ein akustisches Signal ausgegeben werden. Dies kann beispielsweise mit einer entsprechenden akustischen Ausgabeeinrichtung, beispielsweise mit einem Lautsprecher, des Kraftfahrzeugs erfolgen. Dabei wird die akustische Warnung nur ausgegeben, falls sich der Kollisionsabstand in Abhängigkeit der Zeit ändert. Wenn der Kollisionsabstand wesentlich konstant bleibt, kann eine akustische Warnung unterbleiben. Es ist beispielsweise vorteilhaft, wenn sich das Kraftfahrzeug parallel zu einem Hindernis bewegt.

Bevorzugt werden ein Lenkwinkel und/oder eine Geschwindigkeit des Kraftfahrzeugs ermittelt und der voraussichtliche Fahrschlauch wird anhand des ermittelten Lenkwinkels und/oder der ermittelten Geschwindigkeit ermittelt. Der Lenkwinkel des Kraftfahrzeugs kann beispielsweise anhand der Daten eines Lenkwinkelsensors bestimmt werden. Zur Ermittlung der Geschwindigkeit des Kraftfahrzeugs kann beispielsweise die Raddrehzahl zumindest eines Rades des Kraftfahrzeugs erfasst werden. Des Weiteren können die Abmessungen des Kraftfahrzeugs berücksichtigt werden, die beispielsweise in einer Speichereinrichtung des Fahrerassistenzsystems hinterlegt sind. Weiterhin können Modelle berücksichtigt werden, welche die Bewegung des Kraftfahrzeugs beschreiben. Auf diese Weise kann der voraussichtliche Fahrschlauch zuverlässig ermittelt werden.

Ein erfindungsgemäßes Fahrerassistenzsystem ist dazu ausgebildet, ein erfindungsgemäßes Verfahren durchzuführen. Bevorzugt umfasst das Fahrerassistenzsystem eine Sensoreinrichtung zum Ermitteln einer Position eines Objekts, wobei die Sensoreinrichtung zumindest einen Ultraschallsensor, zumindest eine Kamera, zumindest einen Radarsensor und/oder zumindest einen Lasersensor aufweist. Somit kann mit der Sensoreinrichtung beziehungsweise mit entsprechenden Abstandssensoren die relative Lage zu dem Objekt zuverlässig bestimmt werden.

Ein erfindungsgemäßes Kraftfahrzeug umfasst ein erfindungsgemäßes Fahrerassistenzsystem. Das Kraftfahrzeug ist insbesondere als Personenkraftwagen ausgebildet.

In Bezug auf das erfindungsgemäße Verfahren vorgestellten Ausführungsformen und deren Vorteile gelten entsprechend für das erfindungsgemäße Fahrerassistenzsystem sowie für das erfindungsgemäße Kraftfahrzeug.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweiligen angegebenen Kombination, sondern auch in anderen Kombinationen oder aber in Alleinstellung verwendbar.

Die Erfindung wird nun anhand eines bevorzugten Ausführungsbeispiels sowie unter Bezugnahme auf beigefügten Zeichnungen näher erläutert.

Dabei zeigen:

Fig. 1    in schematischer Darstellung ein Kraftfahrzeug gemäß einer Ausführungsform der Erfindung;

Fig. 2    ein Ablaufdiagramm eines Verfahrens gemäß einer Ausführungsform der Erfindung; und

Fig. 3 bis 6    verschieden Szenarien mit unterschiedlichen Anordnungen eines Objekts bezüglich des Kraftfahrzeugs, anhand derer unterschiedlichen Ausführungsformen des Verfahrens erläutert werden.

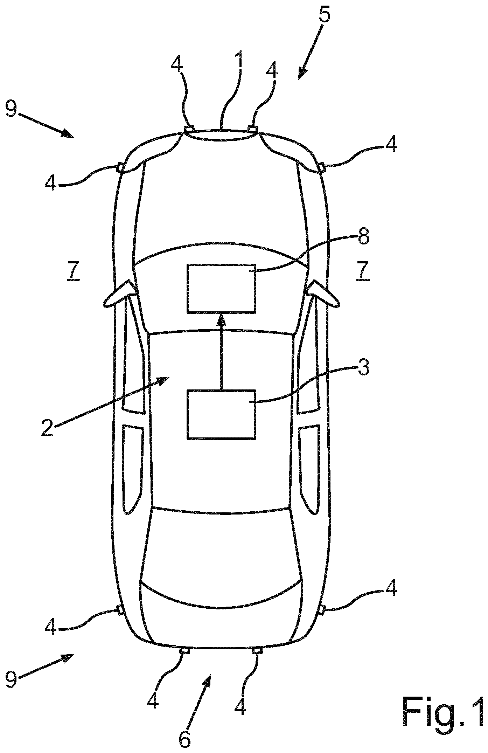

Fig. 1 zeigt ein Kraftfahrzeug gemäß einer Ausführungsform der vorliegenden Erfindung. Das Kraftfahrzeug 1 ist in dem vorliegenden Ausführungsbeispiel als Personenkraftwagen ausgebildet. Das Kraftfahrzeug 1 umfasst ein Fahrerassistenzsystem 2. Das Fahrerassistenzsystem 2 umfasst wiederum eine Steuereinrichtung 3, die beispielsweise durch ein Steuergerät des Kraftfahrzeugs 1 gebildet sein kann. Des Weiteren umfasst das Fahrerassistenzsystem 2 eine Sensoreinrichtung 9.

In dem vorliegenden Ausführungsbeispiel umfasst die Sensoreinrichtung 9 acht Abstandssensoren 4. Dabei sind vier Abstandssensoren 4 in einem Frontbereich 5 des Kraftfahrzeugs 1 und vier Abstandssensoren 4 in einem Heckbereich 6 des Kraftfahrzeugs 1 angeordnet. Die Abstandssensoren 4 sind insbesondere dazu ausgebildet, ein Objekt 12 in einer Umgebung 7 des Kraftfahrzeugs 1 zu erfassen. Des Weiteren können die Abstandssensoren 4 insbesondere dazu ausgelegt sein, einen Abstand zu dem Objekt 12 in der Umgebung 7 des Kraftfahrzeugs 1 zu bestimmen. Die Abstandssensoren 4 können beispielsweise als Ultraschallsensoren, Radarsensoren, Laserscanner, Kameras oder dergleichen ausgebildet sein. Weiterhin kann es auch vorgesehen sein, dass weitere Abstandssensoren beispielsweise an einem äußeren Seitenbereich des Kraftfahrzeugs 1 angeordnet sind.

Darüber hinaus umfasst das Kraftfahrzeug 1 eine Ausgabeeinrichtung 8, die in einem Innenraum des Kraftfahrzeugs 1 angeordnet ist. Die Ausgabeeinrichtung 8 kann beispielsweise einen Bildschirm oder ein Display umfassen, mit dem eine optische Ausgabe erfolgen kann. Alternativ oder zusätzlich kann die Ausgabeeinrichtung 8 dazu ausgebildet sein, ein akustisches Signal auszugeben. Dazu kann die Ausgabeeinrichtung 8 beispielsweise einen entsprechenden Lautsprecher umfassen.

Die Steuereinrichtung 3 ist mit den Abstandssensoren 4 zur Datenübertragung verbunden. Entsprechende Datenleitungen sind vorliegend der Übersichtlichkeit halber nicht dargestellt. Darüber hinaus ist die Steuereinrichtung 3 mit der Ausgabeeinrichtung 8 zur Datenübertragung verbunden. Somit kann beispielsweise eine optische Anzeige auf der Ausgabeeinrichtung 8 mittels der Steuereinrichtung 3 gesteuert werden. Alternativ oder zusätzlich kann die Ausgabe eines akustischen Signals mit der Steuereinrichtung 3 gesteuert werden.

Mit den Abstandssensoren 4 kann das Objekt 12 in der Umgebung 7 des Kraftfahrzeugs 1 erfasst werden. Zudem kann der Abstand zu dem Objekt 12 bestimmt werden. Zu diesem Zweck kann beispielsweise ein Signal mit zumindest einem der Abstandssensoren 4 ausgesendet werden und das von dem Objekt 12 reflektierte Signal wieder empfangen werden. Anhand der Laufzeit des Signals kann der Abstand zu dem Objekt 12 mittels der Steuereinrichtung 3 bestimmt werden. Darüber hinaus ist die Steuereinrichtung 3 dazu ausgebildet, einen voraussichtlichen Fahrschlauch 14 des Kraftfahrzeugs 1 zu berechnen. Hierzu können die Signale eines Lenkwinkelsensors und/oder eines Geschwindigkeitssensors des Kraftfahrzeugs 1 berücksichtigt werden. Anhand der aktuellen Geschwindigkeit und/oder des aktuellen Lenkwinkels kann der voraussichtliche Fahrschlauch 12 berechnet werden. Hierzu können auch die äußeren Abmessungen des Kraftfahrzeugs 1 berücksichtigt werden, die beispielsweise in einer Speichereinheit der Steuereinrichtung 3 hinterlegt sind.

Wenn ein Objekt 12 in der Umgebung 7 des Kraftfahrzeugs 1 detektiert wird und der Abstand zu dem Objekt 12 bestimmt wird, kann ein Wert bzw. ein Messwert für einen Mindestabstand SD zu dem Objekt 12 bestimmt werden. Der Mindestabstand SD, der auch als Shortest Distance bezeichnet werden kann, stellt die kürzeste Entfernung von einer äußeren Fläche des Kraftfahrzeugs 1 zu dem Objekt 12 dar. Des Weiteren kann ein Kollisionsabstand DTC, der auch als Distance to Collision bezeichnet werden kann, berechnet werden. Es kann auch ein Wert bzw. Messwert für den Kollisionsabstand DTC bestimmt werden. Der Kollisionsabstand DTC beschreibt den Abstand des Kraftfahrzeugs 1 zu dem Objekt 12 während des Bewegens des Kraftfahrzeugs 1 innerhalb des Fahrschlauchs 14. Auf diese Weise kann beispielsweise bestimmt werden, welcher Teil des Kraftfahrzeugs 1 gegebenenfalls bei der Fahrt innerhalb des Fahrschlauchs 14 mit dem Objekt 12 kollidieren wird. Wie nachfolgend näher erläutert, können sich der Mindestabstand SD und der Kollisionsabstand DTC unterscheiden.

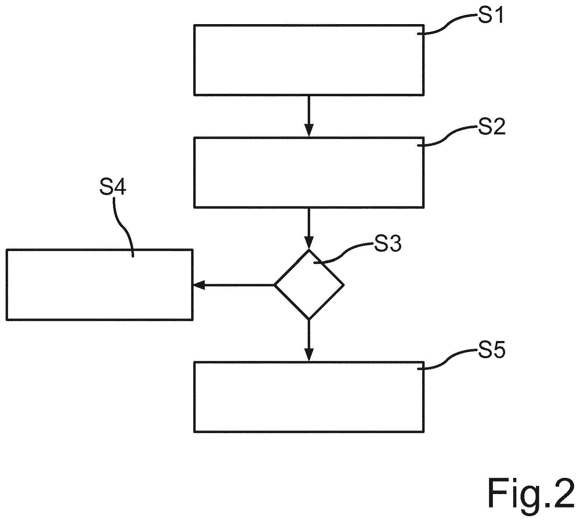

Fig. 2 zeigt ein Ablaufdiagramm gemäß einer Ausführungsform eines erfindungsgemäßen Verfahrens zum Warnen eines Fahrers des Kraftfahrzeugs 1 vor der Anwesenheit eines Objekts 12 in der Umgebung 7 des Kraftfahrzeugs 1. In einem ersten Schritt S1 wird das Verfahren gestartet. Das Verfahren kann beispielsweise beim Starten des Kraftfahrzeugs 1 beziehungsweise beim Aktivieren einer Zündung des Kraftfahrzeugs 1 gestartet werden. Mit den Abstandssensoren 4 wird überprüft, ob sich ein Objekt 12 in der Umgebung 7 des Kraftfahrzeugs 1 befindet. Zudem wird ein Grenzwert für den Mindestabstand SD zwischen dem Kraftfahrzeug 1 und dem Objekt 12 definiert. Wenn der Wert für den Mindestabstand SD den vorbestimmten Grenzwert unterschreitet, wird ein Warnsignal an den Fahrer des Kraftfahrzeugs 1 ausgegeben. Dieses Warnsignal kann über die Ausgabeeinrichtung 8 akustisch und/oder optisch erfolgen. Der vorbestimmte Grenzwert für den Mindestabstand SD kann in dem Schritt S1 festgelegt werden. Der Grenzwert SD kann aber auch in einer Speichereinheit der Steuereinrichtung 3 hinterlegt sein. Der Grenzwert SD kann beispielsweise in einem Bereich zwischen 200 mm und 250 mm liegen.

In einem weiteren Schritt S2 wird der Kollisionsabstand DTC zwischen dem Kraftfahrzeug 1 und dem Objekt 12 bestimmt. Der Kollisionsabstand DTC beschreibt insbesondere den Abstand zwischen Objekt 12 und dem Bereich des Kraftfahrzeugs 1 mit dem eine Kollision bei der Fahrt des Kraftfahrzeugs 1 in dem Fahrschlauch 14 erfolgen wird. Der Kollisionsabstand DTC wird insbesondere fortlaufend oder zu vorbestimmten Zeitpunkten erfasst. Weiterhin ist es vorteilhaft, wenn der Kollisionsabstand DTC in einem vorbestimmten Zeitintervall fortlaufend oder zu vorbestimmten Zeitpunkten ermittelt wird. Dieses Zeitintervall kann beispielsweise 100 ms oder 150 ms betragen.

In einem weiteren Schritt S3 wird überprüft, ob sich der Kollisionsabstand DTC in dem vorbestimmten Zeitintervall in Abhängigkeit von der Zeit geändert hat. Insbesondere wird in dem Schritt S3 überprüft, ob sich der Kollisionsabstand DTC verringert hat. Hat sich der Kollisionsabstand DTC nicht verändert, wird das Verfahren in einem Schritt S4 fortgesetzt. Wenn sich der Kollisionsabstand DTC in Abhängigkeit von der Zeit nicht verändert, wird keine Kollision zwischen dem Kraftfahrzeug 1 und dem Objekt prädiziert. In diesem Fall wird der Wert für den Mindestabstand SD nicht verändert. Für den Fall, dass sich der Kollisionsabstand DTC in Abhängigkeit von der Zeit verringert hat, wird das Verfahren in dem Schritt S5 fortgesetzt. In diesem Fall wird der Wert für den Mindestabstand SD verändert. Insbesondere wird der Wert für den Mindestabstand SD verringert. Insbesondere wird der Wert für den Mindestabstand SD um einen vorbestimmten Korrekturwert a verringert, der in Abhängigkeit von der Veränderung des Kollisionsabstands DTC bestimmt werden kann.

Dies kann beispielsweise dadurch erfolgen, dass der Kollisionsabstand DTC zu zumindest zwei Zeitpunkten innerhalb des Zeitintervalls bestimmt wird. Beispielsweise ergibt sich zu einem Zeitpunkt t1 ein Messwert für den Kollisionsabstand DTC1. Zu einem zweiten Zeitpunkt t2 ergibt sich für die Messung des Kollisionsabstands der Wert DTC2. Die Veränderung des Kollisionsabstands ΔDTC kann somit nach der folgenden Formel berechnet werden:

$$\Delta DTC = DTC2 - DTC1.$$

Der angepasste Wert $W_{neu}$ für den Mindestabstand SD kann nach folgender Formel berechnet werden:

$$W_{neu} = W_{akt} - a.$$

Dabei entspricht $W_{akt}$ einem aktuellen oder vorbestimmten Wert für den Mindestabstand SD. Der Korrekturwert a lässt sich wie folgt bestimmen:

$$a = \Delta DTC / \Delta t * k.$$

Dabei entspricht $\Delta t$ dem zeitlichen Unterschied zwischen den Zeitpunkten t1 und t2. Der Faktor k kann beispielsweise als vorbestimmter Wert in der Speichereinheit der Steuereinrichtung 3 hinterlegt sein. Dabei kann der Faktor k derart vorbestimmt sein, dass sich Korrekturwert a proportional oder indirekt proportional zu der Änderung des Kollisionsabstands DTC in Abhängigkeit von der Zeit ($\Delta DTC / \Delta t$) ändert.

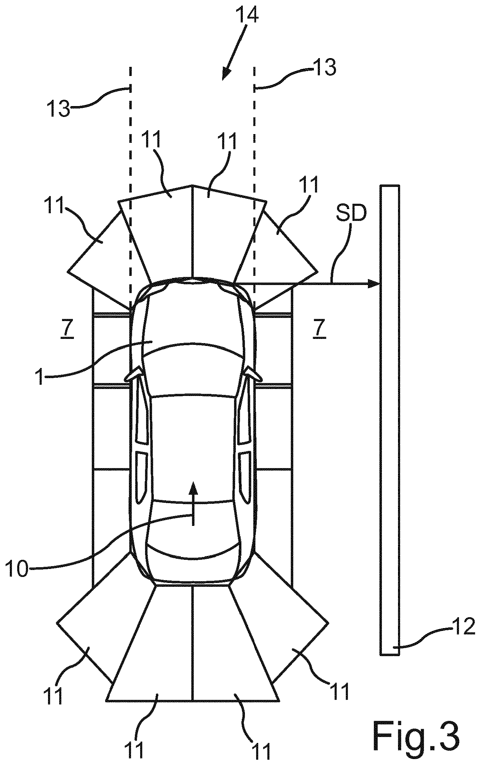

Fig. 3 zeigt ein erstes Szenario zur Verdeutlichung des erfindungsgemäßen Verfahrens. Hierbei ist das Kraftfahrzeug 1 in einer Draufsicht dargestellt. Der Pfeil 10 verdeutlicht die Fahrtrichtung des Kraftfahrzeugs 1. Zudem sind in dieser Darstellung die Erfassungsbereiche 11 der Abstandssensoren 4 dargestellt. Die Erfassungsbereiche 11 zeigen schematisch diejenigen Bereiche, die mit den jeweiligen Abstandssensoren 4 überwacht werden können. Als Objekt 12 befindet sich eine Wand in der Umgebung 7 des Kraftfahrzeugs 1. Das Objekt 12 beziehungsweise die Wand verläuft in diesem Fall parallel zu dem voraussichtlichen Fahrschlauch 14 des Kraftfahrzeugs 1. Der voraussichtliche Fahrschlauch 14 ist vorliegend durch die beiden Linien 13 begrenzt. In diesem Fall ist der Kollisionsabstand DTC = 0. Der Kollisionsabstand DTC ändert sich im Laufe der Zeit nicht, da das Kraftfahrzeug 1 parallel zu dem Objekt 12 bewegt wird. In diesem Fall wird der Wert für den Mindestabstand SD nicht angepasst.

In dem Beispiel gemäß Fig. 3 kann mittels der Ausgabeeinrichtung 8 ein optisches Signal ausgegeben werden, falls der Grenzwert unterschritten wird. In gleicher Weise kann es vorgesehen sein, dass der aktuelle Grenzwert optisch ausgegeben wird. Alternativ oder zusätzlich kann eine akustische Warnung ausgegeben werden, falls der Grenzwert für den Wert des Mindestabstands SD unterschritten wird. Dabei kann es insbesondere vorgesehen sein, dass keine akustische Warnung ausgegeben wird, falls sich der aktuelle Wert für den Mindestabstand SD an den Grenzwert annähert. Gemäß dem Stand der Technik wird hier beispielsweise ein periodisches Signal ausgegeben wird, dessen Frequenz bei der Verringerung des Abstands erhöht wird. Auf diese Weise wird der Fahrer nicht durch das akustische Warnsignal gestört, falls sich nahe an dem Objekt 12 befindet und keine Kollisionsgefahr besteht.

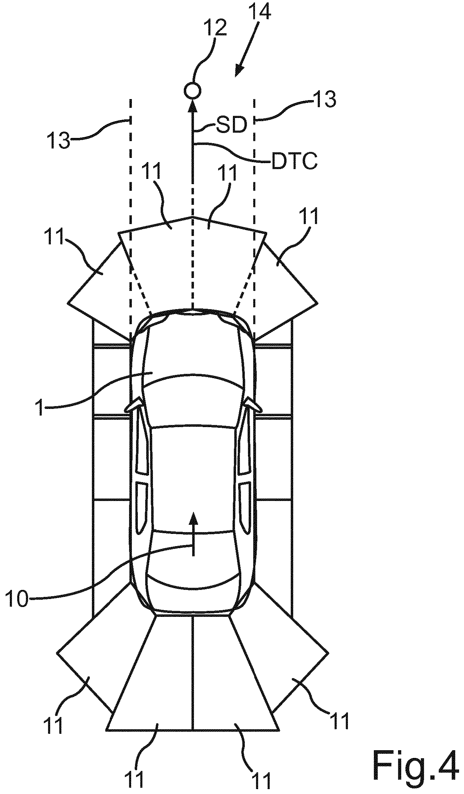

Fig. 4 zeigt ein weiteres Szenario, bei dem sich das Objekt 12 direkt vor dem Kraftfahrzeug 1 befindet. In diesem Fall befindet sich das Objekt 12 innerhalb des voraussichtlichen Fahrschlauchs 14 des Kraftfahrzeugs 1. In diesem Fall entspricht der Mindestabstand SD dem Kollisionsabstand DTC. Dabei verringert sich der Kollisionsabstand DTC in Abhängigkeit der Zeit. Somit kann der Wert für den Mindestabstand SD, wie oben beschrieben, entsprechend angepasst und insbesondere verringert werden. In diesem Fall kann ein optisches Warnsignal ausgegeben werden, falls der Wert für den Mindestabstand SD den Grenzwert unterschreitet. Alternativ oder zusätzlich kann ein akustisches Warnsignal ausgegeben werden, falls der Grenzwert unterschritten wird.

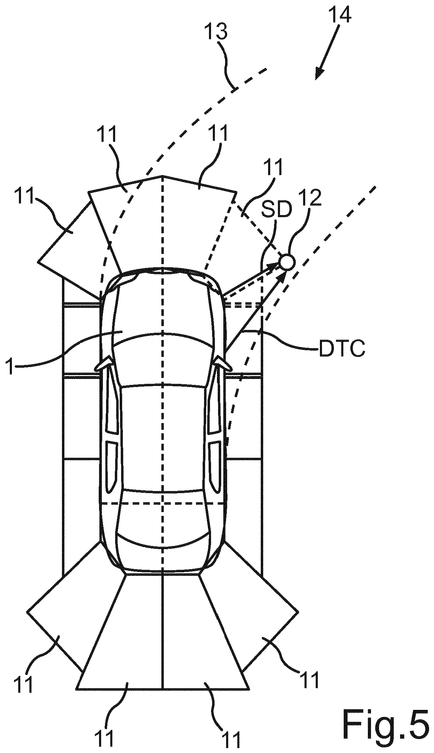

Fig. 5 zeigt ein weiteres Ausführungsbeispiel, bei dem sich das Objekt 12 innerhalb des voraussichtlichen Fahrschlauchs 14 des Kraftfahrzeugs 1 befindet. Das Kraftfahrzeug 1 führt in den vorliegenden Fall eine Kurvenfahrt durch. In diesem Fall unterscheiden sich der Mindestabstand SD und der Kollisionsabstand DTC. Wenn das Kraftfahrzeug 1 innerhalb des vorbestimmten Fahrschlauchs 14 bewegt wird, würde das Kraftfahrzeug 1 mit dem vorderen rechten Radkasten mit dem Objekt 12 kollidieren. Der Mindestabstand SD, der in dem gezeigten Beispiel dem Abstand zwischen dem rechten Scheinwerfer und dem Objekt 12 entspricht, ist geringer als der Kollisionsabstand DTC.

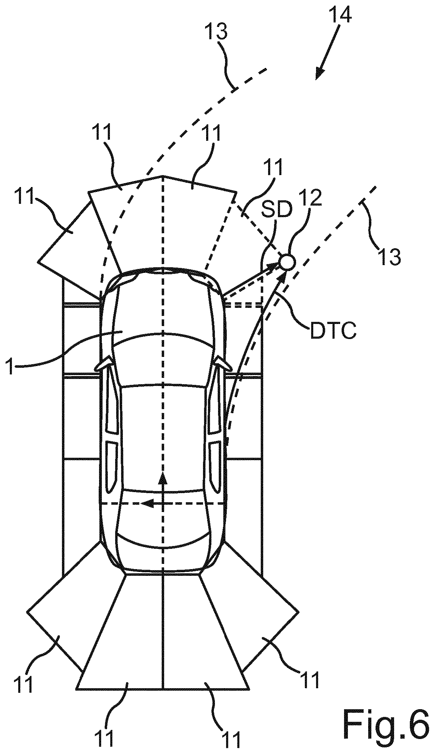

Im Vergleich hierzu zeigt Fig. 6 ein Szenario, bei welchem sich das Objekt ebenfalls innerhalb des voraussichtlichen Fahrschlauchs 14 des Kraftfahrzeugs 1 befindet. Das Kraftfahrzeug 1 befindet sich ebenfalls auf einer Kurvenfahrt, wobei der Kurvenradius im Vergleich zu dem Beispiel gemäß Fig. 5 größer ist. Dies hat zur folge, dass das Kraftfahrzeug 1 bei der Bewegung innerhalb des Fahrschlauchs 14 mit einem rechten Seitenbereich mit dem Objekt 12 kollidieren würde. Der Mindestabstand SD entspricht auch hier dem rechten Scheinwerfer und dem Objekt 12.

In dem Beispiel gemäß Fig. 5 ist die Änderung des Kollisionsabstands DTC in Abhängigkeit von der Zeit im Vergleich zu dem Beispiel gemäß Fig. 6 bei jeweils gleicher Fahrzeuggeschwindigkeit größer. Der Wert für den Mindestabstand SD kann bei dem Beispiel nach Fig. 5 um einen geringeren Korrekturwert reduziert werden als bei dem Beispiel nach Fig. 6. Somit kann der Fahrer rechtzeitig vor dem Objekt gewarnt werden. Die Warnung kann optisch und/oder akustisch beim Unterschreiten des angepassten Werts für den Mindestabstand SD erfolgen. Auf diese Weise kann eine Kollision zwischen dem Kraftfahrzeug 1 und dem Objekt 12 verhindert werden.

**Patentansprüche**

1.  Verfahren zum Warnen eines Fahrers eines Kraftfahrzeugs (1) vor der Anwesenheit eines Objekts (12) in einer Umgebung (7) des Kraftfahrzeugs (1) mittels eines Fahrerassistenzsystems (2), bei welchem eine Position des Objekts (12) mittels einer Sensoreinrichtung (9) ermittelt wird, ein voraussichtlicher Fahrschlauch (14) des Kraftfahrzeugs (1) ermittelt wird, anhand der ermittelten Position des Objekts (12) und des ermittelten Fahrschlauchs (14) ein Kollisionsabstand (DTC), welcher einen Abstand zwischen dem Kraftfahrzeug (1) und dem Objekt (12) beim Bewegen des Kraftfahrzeugs (1) innerhalb des ermittelten Fahrschlauchs (14) beschreibt, ermittelt wird, ein Wert für einen Mindestabstand (SD) zwischen dem Kraftfahrzeug (1) und dem Objekt (12) ermittelt wird und ein Warnsignal ausgegeben wird, falls der Wert für den Mindestabstand (SD) einen vorbestimmten Grenzwert unterschreitet, **dadurch gekennzeichnet, dass** der ermittelte Wert für den Mindestabstand (SD) in Abhängigkeit von dem ermittelten Kollisionsabstand (DTC) angepasst wird.

2.  Verfahren nach Anspruch 1, **dadurch gekennzeichnet, dass** der Kollisionsabstand (DTC) in Abhängigkeit von der Zeit ermittelt wird und der ermittelte Wert für den Mindestabstand (SD) angepasst wird, falls sich der Kollisionsabstand (DTC) in Abhängigkeit von der Zeit ändert.

3.  Verfahren nach Anspruch 1 oder 2, **dadurch gekennzeichnet, dass** der ermittelte Wert für den Mindestabstand (SD) verringert wird, falls sich der ermittelte Kollisionsabstand (DTC) in Abhängigkeit von der Zeit verringert (S5).

4.  Verfahren nach Anspruch 3, **dadurch gekennzeichnet, dass** anhand der Verringerung des Kollisionsabstands (DTC) in Abhängigkeit von der Zeit ein Korrekturwert bestimmt wird und der vorbestimmte Grenzwert um den Korrekturwert verringert wird.

5.  Verfahren nach einem der vorhergehenden Ansprüche, **dadurch gekennzeichnet, dass** der Kollisionsabstand (DTC) während einer vorbestimmten Zeitdauer fortlaufend ermittelt wird (S2).

6.  Verfahren nach Anspruch 5, **dadurch gekennzeichnet, dass** die vorbestimmte Zeitdauer, während der der Kollisionsabstand (DTC) fortlaufend ermittelt wird, in einem Intervall zwischen 100 ms und 150 ms liegt.

7.  Verfahren nach einem der vorhergehenden Ansprüche, **dadurch gekennzeichnet, dass** ein optisches Signal als das Warnsignal ausgegeben wird, falls der Grenzwert unterschritten wird.

8.  Verfahren nach einem der vorhergehenden Ansprüche, **dadurch gekennzeichnet, dass** ein akustisches Signal als das Warnsignal ausgegeben wird, falls der Grenzwert unterschritten wird und eine Änderung des Kollisionsabstands (DTC) in Abhängigkeit von der Zeit ermittelt wird.

9.  Verfahren nach einem der vorhergehenden Ansprüche,

    **dadurch gekennzeichnet, dass** ein Lenkwinkel und/oder eine Geschwindigkeit des Kraftfahrzeugs (1) ermittelt wird und der voraussichtliche Fahrschlauch (14) anhand des ermittelten Lenkwinkels und/oder der ermittelten Geschwindigkeit ermittelt wird.

10. Fahrassistenzsystem (2) welches zum Durchführen eines Verfahrens nach einem der vorhergehenden Ansprüche ausgebildet ist.

11. Fahrerassistenzsystem (2) nach Anspruch 10, **dadurch gekennzeichnet, dass** das Fahrerassistenzsystem (2) eine Sensoreinrichtung (9) zum Ermitteln einer Position eines Objekts umfasst, wobei die Sensoreinrichtung zumindest einen Ultraschallsensor, zumindest eine Kamera, zumindest einen Radarsensor und/oder zumindest einen Lasersensor aufweist.

12. Kraftfahrzeug (1) mit einem Fahrerassistenzsystem (2) nach einem der Ansprüche 10 oder 11.

**Claims**

1.  Method for warning a driver of a motor vehicle (1) about the presence of an object (12) in the surroundings (7) of the motor vehicle (1) by means of a driver assistance system (2), in which a position of the object (12) is determined by means of a sensor device (9), an anticipated driving tube (14) of the motor vehicle (1) is determined, a collision distance (DTC), which describes a distance between the motor vehicle (1) and the object (12) when the motor vehicle (1) moves within the determined driving tube (14), is determined on the basis of the determined position of the object (12) and the determined driving tube (14), a value of a minimum distance (SD) between the motor vehicle (1) and the object (12) is determined, and a warning signal is output if the value of the minimum distance (SD) undershoots a predetermined limiting value,
**characterized in that**
the determined value of the minimum distance (SD) is adapted as a function of the determined collision distance (DTC).

2. Method according to Claim 1,
**characterized in that**
the collision distance (DTC) is determined as a function of time, and the determined value of the minimum distance (SD) is adapted if the collision distance (DTC) changes as a function of time.

3. Method according to Claim 1 or 2,
**characterized in that**
the determined value of the minimum distance (SD) is reduced if the determined collision distance (DTC) reduces as a function of time (S5).

4. Method according to Claim 3,
**characterized in that**
a correction value is determined on the basis of the reduction in the collision distance (DTC) as a function of time, and the predetermined limiting value is reduced by the correction value.

5. Method according to one of the preceding claims,
**characterized in that**
the collision distance (DTC) is determined continuously during a predetermined time period (S2) .

6. Method according to Claim 5,
**characterized in that**
the predetermined time period during which the collision distance (DTC) is continuously determined lies in an interval between 100 ms and 150 ms.

7. Method according to one of the preceding claims,
**characterized in that**
a visual signal is output as the warning signal if the limiting value is undershot.

8. Method according to one of the preceding claims,
**characterized in that**
an acoustic signal is output as the warning signal if the limiting value is undershot and a change in the collision distance (DTC) is determined as a function of time.

9. Method according to one of the preceding claims,
**characterized in that**
a steering angle and/or a speed of the motor vehicle (1) is determined and the anticipated driving tube (14) is determined on the basis of the determined steering angle and/or the determined speed.

10. Driver assistance system (2) which is designed to carry out a method according to one of the preceding claims.

11. Driver assistance system (2) according to Claim 10,
**characterized in that**
the driver assistance system (2) comprises a sensor device (9) for determining a position of an object, wherein the sensor device has at least one ultrasonic sensor, at least one camera, at least one radar sensor and/or at least one laser sensor.

12. Motor vehicle (1) having a driver assistance system (2) according to either of Claims 10 and 11.

**Revendications**

1. Procédé pour avertir le conducteur d'un véhicule à moteur (1) de la présence d'un objet (12) dans l'environnement proche (7) du véhicule à moteur (1) au moyen d'un système d'aide à la conduite (2), lors duquel une position de l'objet (12) est déterminée au moyen d'un dispositif de capteur (9), une trajectoire anticipée (14) du véhicule à moteur (1) est déterminée, une distance de collision (DTC) est déterminée à l'aide de la position déterminée de l'objet (12) et de la trajectoire déterminée (14), décrivant une distance entre le véhicule à moteur (1) et l'objet (12) lors du déplacement du véhicule à moteur (1) à l'intérieur de la trajectoire déterminée (14), une valeur pour une distance minimale (SD) entre le véhicule à moteur (1) et l'objet (12) est déterminée et un signal d'avertissement est émis au cas où la valeur pour la distance minimale (SD) sous-dépasse une valeur limite prédéfinie, **caractérisé en ce que** la valeur déterminée pour la distance minimale (SD) est ajustée en fonction de la distance de collision (DTC) déterminée.

2. Procédé selon la revendication 1, **caractérisé en ce que** la distance de collision (DTC) est déterminée en fonction du temps et la valeur déterminée pour la distance minimale (SD) est ajustée au cas où la distance de collision (DTC) varie en fonction du temps.

3. Procédé selon la revendication 1 ou 2, **caractérisé en ce que** la valeur déterminée pour la distance minimale (SD) est réduite dans le cas où la distance de collision déterminée (DTC) se réduit en fonction du temps (S5).

4. Procédé selon la revendication 3, **caractérisé en ce qu'**une valeur de correction est définie à l'aide de la réduction de la distance de collision (DTC) en fonction du temps et la valeur limite prédéfinie est réduite de la valeur de correction.

5. Procédé selon l'une des revendications précédentes, **caractérisé en ce que** la distance de collision (DTC) est déterminée en continu (S2) pendant une durée prédéfinie.

6.  Procédé selon la revendication 5, **caractérisé en ce que** la durée prédéfinie pendant laquelle la distance de collision (DTC) est déterminée en continu est comprise dans un intervalle entre 100 ms et 150 ms.

7.  Procédé selon l'une des revendications précédentes, **caractérisé en ce qu'**un signal optique est émis comme signal d'avertissement dans le cas où la valeur limite est sous-dépassée.

8.  Procédé selon l'une des revendications précédentes, **caractérisé en ce qu'**un signal acoustique est émis comme signal d'avertissement dans le cas où la valeur limite est sous-dépassée et une variation de la distance de collision (DTC) est déterminée en fonction du temps.

9.  Procédé selon l'une des revendications précédentes, **caractérisé en ce qu'**un angle de direction et/ou une vitesse du véhicule à moteur (1) est déterminé(e) et la trajectoire anticipée (14) est déterminée à l'aide de l'angle de direction déterminé et/ou de la vitesse déterminée.

10. Système d'aide à la conduite (2), lequel est réalisé pour mettre en œuvre en procédé selon l'une des revendications précédentes.

11. Système d'aide à la conduite (2) selon la revendication 10, **caractérisé en ce que** le système d'aide à la conduite (2) comprend un dispositif de capteur (9) destiné à déterminer une position d'un objet, dans lequel le dispositif de capteur comporte au moins un capteur à ultrasons, au moins une caméra, au moins un capteur radar et/ou au moins un capteur laser.

12. Véhicule à moteur (1) doté d'un système d'aide à la conduite (2) selon l'une des revendications 10 ou 11.

Fig.1

Fig.2

Fig.3

Fig.4

Fig.5

Fig.6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012203228 A1
- DE 10128792 A1
- DE 19843564 A1

- DE 102010023164 A1
- WO 2013037539 A1